(19) Europäisches Patentamt
European Patent Office
Office européen des brevets

(11) **EP 2 629 236 B1**

(12) **EUROPEAN PATENT SPECIFICATION**

(45) Date of publication and mention
of the grant of the patent:
**21.12.2016 Bulletin 2016/51**

(21) Application number: **11832058.9**

(22) Date of filing: **14.10.2011**

(51) Int Cl.:
**G06K 9/00** *(2006.01)*

(86) International application number:
**PCT/CN2011/080804**

(87) International publication number:
**WO 2012/048661 (19.04.2012 Gazette 2012/16)**

(54) **RASTERIZATION METHOD AND DEVICE**

RASTERUNGSVERFAHREN UND -VORRICHTUNG

PROCÉDÉ ET DISPOSITIF DE TRAMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.10.2010 CN 201010512135**

(43) Date of publication of application:
**21.08.2013 Bulletin 2013/34**

(73) Proprietors:
• **Peking University Founder Group Co., Ltd
Haidian District
Beijing 100871 (CN)**
• **Beijing Founder Electronics Co., Ltd.
Haidian District, Beijing 100085 (CN)**

(72) Inventors:
• **HUANG, Genglin
Beijing 100085 (CN)**
• **LIN, Hao
Beijing 100085 (CN)**
• **TANG, Yu
Beijing 100085 (CN)**

(74) Representative: **Regimbeau
20, rue de Chazelles
75847 Paris Cedex 17 (FR)**

(56) References cited:
**WO-A2-2005/114572    CN-A- 1 333 519
CN-A- 1 790 378    CN-A- 101 140 505
US-A1- 2002 180 747    US-A1- 2003 132 945
US-A1- 2007 140 571**

Remarks:
The file contains technical information submitted after the application was filed and not included in this specification

**Description**

**Technical Field**

The present application relates to a graphic image processing field, in particular, to a method and an apparatus for rasterizing a primitive of the graphic image.

**Background**

A spatial position of each point in a primitive of an image is closely related to a color displayed at each point in the page. The relationship between the spatial position and the color is described by using a continuous function or a piecewise continuous function. The color presented at the position of each point in the primitive are changed gradually, which is known as gradient.

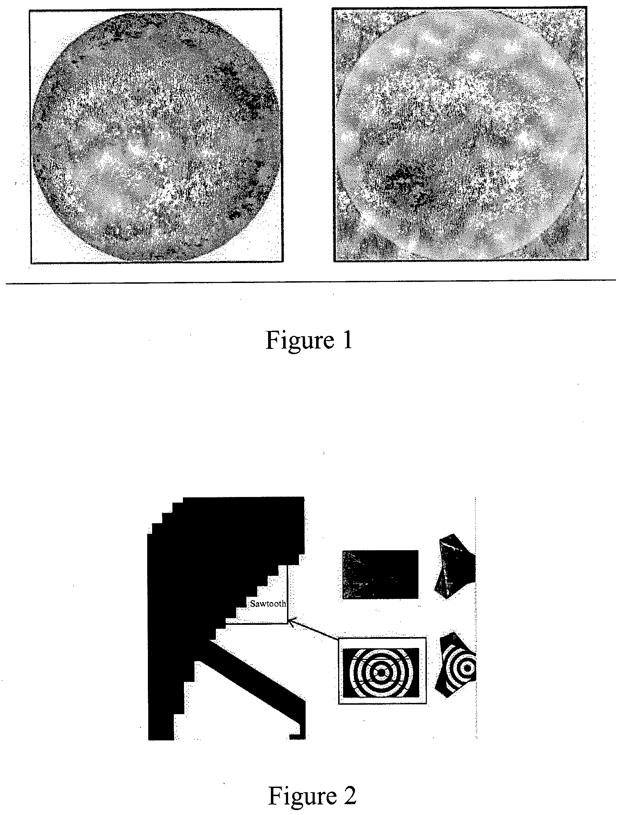

Several types of gradient are defined in PDF/PostScript standard, including a function gradient, a linear gradient, a circular gradient, a free structure gradient, a staggered structure gradient, Koons gradient and a tensor gradient. A typical circular gradient is shown in Fig. 1.

As mentioned above, the color displayed at each point in the range of the gradient primitive is calculated through a corresponding function, wherein the spatial position of the point will be taken as an independent variable. For example, the following variables are firstly defined in the circular gradient:

(a) spatial positions of two circles $C0: (x0,y0,r0)$, $C1: (x1,y1,r1)$;
(b) initial parameters of the two circles $t_0,t_1$;
(c) color at the two periphery for the two circles $S0,S1$;
(d) a spatial color converting function $f(t)$; and
(e) all the other points of the spatial space are located at circles $Cs:(x_c(s),y_c(s),r(s))$, each of which corresponds to a value of $t$ where $t_0 \leq t < t_1$.

Next, the color displayed at each point between the circles $C0$ and $C1$ are calculated by the following functions:

$$\begin{cases} x_c(s) = x_0 + s \times (x_1 - x_0) \\ y_c(s) = y_0 + s \times (y_1 - y_0) \\ r(s) = r_0 + s \times (r_1 - r_0) \\ s = (t - t_0)/(t_1 - t_0) \end{cases} \quad (1.1)$$

The circle $(x_c(s),y_c(s),r(s))$ in each space corresponds to a specific $t$, and thus the color value of each point at the periphery may be calculated by bring $t$ into the function $f(t)$. When the primitive is rasterized, it needs to calculate space coordinates for each point in the gradient space based on space coordinates of the point in the current device page, and to calculate $t$ for the point according to the calculated space coordinates and equations set (1.1), and then to calculate the final color displayed at the point.

In the other types of gradient, the primitive is described and rasterized in a similar way, that is, the initial parameters $t_0$, $t_1$, the initial colors $S0$, $S1$, the spatial color function $f(t)$ may be also determined, where $t_0 \leq t \leq t_1$.

It can be seen from the above that it needs to calculate each device point covered by the primitive when the primitive is rasterized. Therefore, the rasterization efficiency is relatively low when the resolution of the device is high. In this regard, when the resolution of the device is high, it needs to reduce the resolution first and then to calculate. After that, it needs to increase the reduced resolution up to the original resolution when the final page is finished. Normally, the ratio of the final resolution to the reduced resolution is called as resolution reduction coefficient.

The well known methods for reducing the resolution are not relatively flexible. For example, according to some methods, the ratio of the resolution to mesh count of a screening may be determined as the resolution reduction coefficient, or in another methods, the ratio of a length of the primitive in the page to the color difference between both ends of the primitive may be determined as the resolution reduction coefficient. But the inventors have found that the characteristics of the gradient primitive are not fully considered to reduce the resolution in these methods. As a result, for a relatively gentle color gradient, it cannot obtain better rasterization efficiency; on the other hand, for a dramatic color gradient, it loses the original characteristics of the primitives. For example, a typical distortion is that a sawtooth occurs at a position of color transition. A typical sawtooth phenomenon is shown in Fig. 2.

WO 2005/114572 A2 (NVIDIA CORP [US]; HUTCHINS EDWARD A [US]; NORI SEKHAR [US]) 1 December 2005 (2005-12-01 discloses method and system to rasterize geometric primitive comprising a plurality of vertices wherein each vertex comprises a respective color value. The method takes the vertex information from primitives and renders these triangles by calculating the barycentric coordinates of the triangles and in this way distances in a triangle are measured with respect to its vertices, reducing computation time.

## Summary

The present application intents to provide a method and an apparatus for rasterizing a primitive of the graphic image to solve the distortion or the low efficiency problem

According one embodiment of the present application, a method for rasterizing a primitive of the graphic image is provided. According to the method, a primitive may be divided, at a position where a color abruptly changes in the primitive, into a plurality of sub primitives with continuously and gradually changed colors. Each of the sub primitives is then rasterized.

According another embodiment of the present application, it is provided an apparatus for rasterizing an image. The apparatus may comprise a dividing module configured to divide a primitive at a position where a color abruptly changes into a plurality of sub primitives with continuously and gradually changed color. Furthermore, the apparatus comprises a rasterizing module configure to rasterize each of the sub primitives.

The method and the apparatus can rasterize the primitive regionally so as to avoid the distortion or the lower rasterization efficiency due to the fixed resolution reduction coefficient. Thus, the speed of the rasterization and the quality of the image can be improved.

## Brief Description of the Drawing

The drawings described herein are used to provide a further understanding to the present application and constitute a part of this specification. Exemplary embodiments of the present application and their descriptions serve to explain the present application and do not constitute improper limitation on the present application. In the drawings:

Fig. 1 is a schematic diagram of a circular gradient.
Fig. 2 is a schematic diagram illustrating a sawtooth occurred when quality of the rasterization is low.
Fig. 3 is a flowchart illustrating a method for rasterization according to an embodiment of the present application.
Fig.4 is a schematic diagram of the circular gradient according to a preferable embodiment of the present application.
Fig. 5 is a schematic diagram illustrating the gradient primitive of the Fig. 4 is divided into different regions.
Fig.6 is a final dot matrix of the region 1 shown in Fig. 5.
Fig. 7 is a final dot matrix of the region 2 shown in Fig. 5.
Fig. 8 is a final dot matrix of the gradient primitive shown in Fig. 5.
Fig. 9 is a schematic diagram illustrating an apparatus for rasterization according to an embodiment of the present application.

## Detailed Description

Hereinafter, the present application will be explained in detail with reference to the accompanying drawings in connection with the embodiments. It should be noted that the present application refers to graphic image processing field, and thus it inevitably needs to use colorful image to illustrate the processing of the color. However, the original colorful image was rendered as a black and white picture due to publishing and printing. This disclosure will try to use the text to illustrate the color.

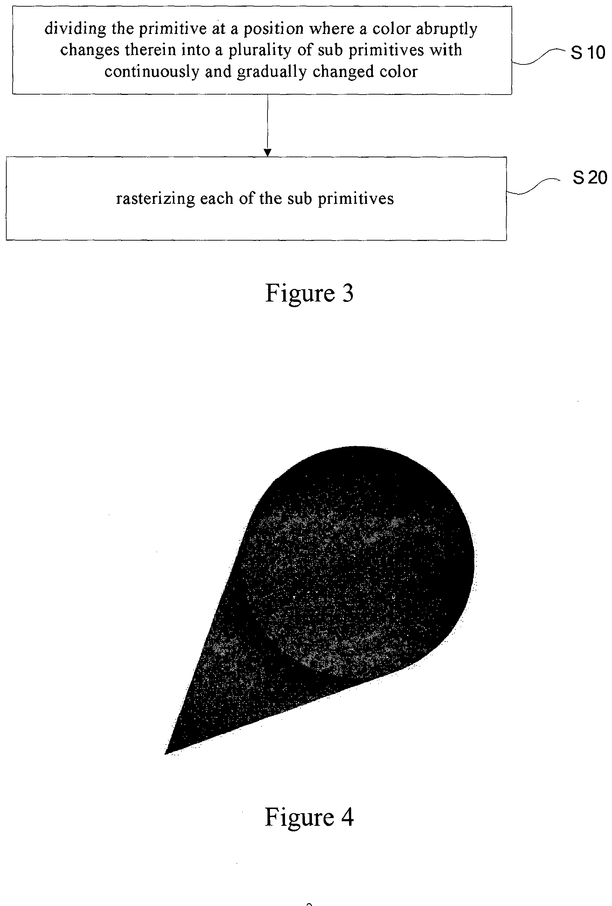

Fig. 3 is a flowchart illustrating a method for rasterization according to an embodiment of the present application. The method comprises the following two steps.

Step S10: a primitive at a position where a color abruptly changes therein is divided into a plurality of sub primitives with continuously and gradually changed color.

Step S20: each of the sub primitives is rasterized.

In the prior art, a resolution reduction coefficient is fixedly provided for a primitive, that is, the primitive as a whole is reduced to a fixed resolution. However, there may be a plurality of regions in the primitive, which are very different in color gradient. For a region with a gentle color gradient, a fixed resolution reduction coefficient may be too large such that an image distortion may incur. But for other regions with a dramatic color gradient, a fixed resolution reduction coefficient may be too small resulting in the lower rasterization efficiency.

In the method for rasterization according to the embodiment, the characteristics of the primitive itself are comprehensively considered and the primitive can be divided into a plurality of regions based on the gradient. Therefore, the gradient may be rasterized regionally so as to avoid the image distortion or the lower rasterized efficiency due to the fixed resolution reduction coefficient of the primitive. Thus, the speed of the rasterization and the quality of the image can be improved.

Preferably, in the step S10, a shape and structure description of the primitive is scanned and a spatial position of the primitive in a direction of the gradient is taken as an independent variable. The corresponding parameters for each point with the independent variable are then calculated. And then it is determined whether there are discontinuous parameters in the corresponding parameters, if yes, the primitive at a position where the parameter abruptly changes will be divided.

Preferably, the step S10 may comprise a step of scanning a spatial color function of the primitive to determine if the spatial color function is a piecewise continuous function. If yes, the primitive at a position between two adjacent pieces of the piecewise continuous function will be divided.

Generally, the shape and structure description of the primitive maybe scanned first, and then the spatial color function may be scanned. In the above embodiment, the position where the color abruptly changes in the primitive can be easily identified.

Fig.4 is a schematic diagram of the circular gradient according to a preferable embodiment of the present application. A primitive with 72dpi is described as below:

$t_0 = 0.0 \ t_1 = 1.0$

Circle 1

    The center coordinates: 100.0 100.0
    Radius 0
    Color C= 0.0 M= 1.0 Y = 0.0 K = 0.0

Circle 2

    The center coordinates: 300.0 300.0
    Radius 120
    Color C = 1.0 M = 0.0 Y = 1.0 K = 0.0
    The spatial color function: $C_i(t) = A_i0+(A_i1-A_i0)*t$
    A0 = [0.0, 1.0, 0.0, 0.0] A1 = [1.0, 0.0, 1.0, 0.0]
    that is, $A_10 = 1.0, A_20 = 1.0, A_30 = 0.0, A_40 = 0.0; A_11 = 1.0, A_21 = 0.0, A_31 = 1.0, A_41 = 0.0$.

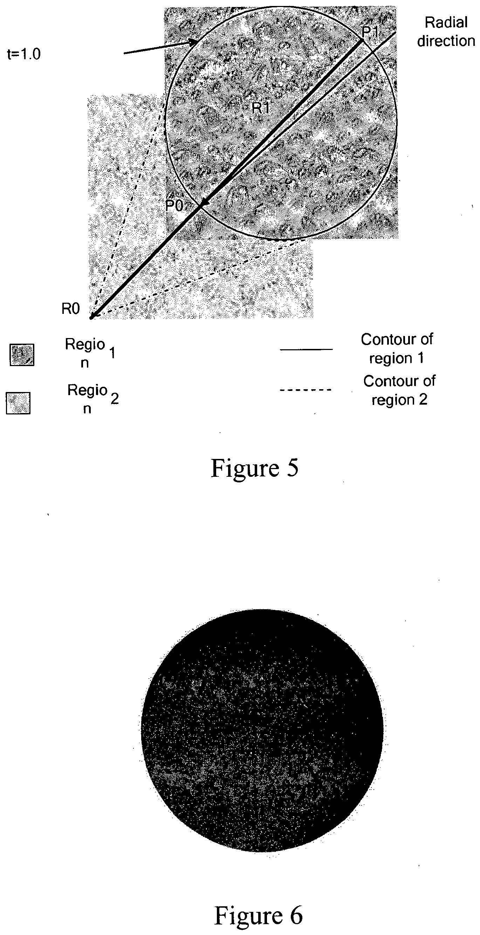

Fig. 5 is a schematic diagram illustrating the gradient primitive of the Fig. 4 is divided into different regions. As shown, the abruptly changes occur at the periphery $t = 1.0$ in the radial direction in which the two centers of the circles are connected to each other, and thus the primitive can be divided into two parts. One part is located within the circle of $t = 1.0$, the other part is located in the other region.

Preferably, in the step S20, the respective resolution reduction coefficient for each sub primitive is set based on the ratio of the color change to the spatial size of each sub primitive, and then the resolution of each sub primitive is reduced in accordance with the respective resolution reduction coefficient. In addition, each sub primitive with the reduced resolution is rasterized, and the resolution of the rasterized sub primitive is recovered to the original resolution.

In the preferable embodiment, when the primitive is rasterized, the resolution reduction coefficients are dynamically determined so as to ensure optimum output quality and efficiency.

Preferably, in the step of setting respective resolution reduction coefficient for each sub primitive, for the spatial color function of the sub primitive in each color field, it takes a derivative $d(s_i)/d(l)$ with respect to a spatial length, where $s_i$ is a spatial color function in $i^{th}$ color field and $l$ is a spatial length. The maximum value $max\ (d(s_i)/d(l))$ is taken as a quantized value for the color change. And then the resolution reduction coefficient of the sub primitive $nBlockSize$ is set based on the quantized value $max\ (d(s_i)/d(l))$ by rule of

$$nBlockSize = L_d/(S_{max}/max(\ d(s_i)/d(l))),$$

where $L_d$ is a spatial length in the radial direction of the sub primitive, and $S_{max}$ is the maximum color difference in the range of the sub primitive.

The method as described in the above can be easily implemented to set a resolution reduction coefficient with less calculation. Obviously, the present application is not limited thereto. For example, an average value of $d(s_i)/d(l)$ can

be taken as the quantized value for the color change.

In the preferable embodiment shown in Fig. 4, it is assumed that the resolution is 600 dpi and the color resolution is 256. The quantized value for the intensity of the color change in two regions and the respective resolution reduction coefficients are calculated, respectively. Since the region 1 and region 2 actually take the same spatial color function, the ways for solving the quantized values for the intensity of the color change in two regions are similar.

The following equations can be obtained according to the equations (1.1):

$$\left[\left(x1-x0\right)^2+\left(y1-y0\right)^2-\left(r1-r0\right)^2\right]*s-2*s*$$
$$\left[\left(x-x0\right)*\left(x1-x0\right)+\left(y-y0\right)*\left(y1-y0\right)+r0*\left(r1-r0\right)\right]+\left[\left(x-x0\right)^2+\left(y-y0\right)^2-r0^2\right]=0$$

From the above, it can be seen that 0.0 <= $s$ <= 1.0, after the high index items are divided out, $x$ and $y$ can be regarded as a similar linear change to $s$. In addition, the color can be regarded as a similar linear change to $s$ according to the spatial color function. Therefore, the color and the spatial position are linear changed. As a result, for the region 1, it requires a total of 180 steps in the radial direction $P0$->$P1$ to linearly change from $t = 0.3$ to $t = 0.1$ based on the color resolution of 256 (that is, it requires a total of 256 steps from 0.0 to 1.0 if the value of the color steps 1 each time in the apparatus). But the number of pixels in the direction $P0$->$P1$ is 600*600/72=5000, so the maximum resolution reduction coefficient is 5000/180=27.

Similarly, the region 2 can be solved for the maximum resolution reduction coefficient of 4.

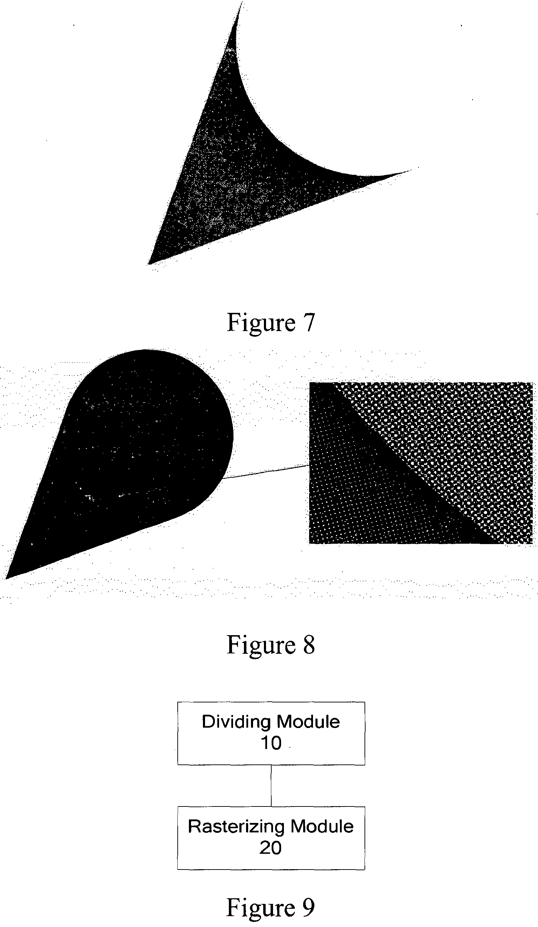

As shown in Figs. 6 and 7, dot matrixes of the respective region may be generated based on the actual resolutions.

Preferably, the method for rasterization further comprises a step of generating a clip path for each sub primitive when obtaining the plurality of sub primitives with the continuously and gradually changed color, and then defining a range of each sub primitive with the respective clip path when the resolution of the rasterized sub primitives is recovered. The union set of all the clip paths is the outline path of the original primitive. As shown by contour in Fig. 5, after the primitive is divided into two regions, the boundary contours of the two regions may be taken as the clip paths to define the two regions. In the preferable embodiment, an overflow can be avoided when the sub primitives are recovered.

As shown in Fig. 8, when the two regions are output to pages, the final output result of the gradient primitive can be obtained. In addition, it can be found that no sawtooth occurs at a position of color transition of the primitive.

Fig. 9 is a schematic diagram illustrating an apparatus for rasterization according to an embodiment of the present application. The apparatus comprises a dividing module 10 configured to divide a primitive at a position where a color abruptly changes therein into a plurality of sub primitives with continuously and gradually changed color. Furthermore, the apparatus comprises a rasterizing module 20 configure to rasterize each of the sub primitives.

The apparatus according to the embodiment may comprehensively consider the characteristics of the primitive itself and divide the primitive into a plurality of regions based on the gradient. Therefore, the apparatus may rasterize the gradient regionally so as to avoid the image distortion or the lower rasterized efficiency due to the fixed resolution reduction coefficient of the primitive. Thus, the speed of the rasterization and the quality of the image can be improved.

Preferably, the dividing module 10 comprises a first scanning module configured to scan a shape and structure description of the primitive. The dividing module 10 further comprises a first dividing module configured to take a spatial position in a direction of the gradient as an independent variable and calculate corresponding parameters for each point with the independent variable. In addition, the first dividing module may be configured to determine whether there are discontinuous parameters in the corresponding parameters. If yes, the first dividing module operates to divide the primitive at a position where the parameter abruptly changes. Additionally, the dividing module 10 further comprises a second scanning module configured to scan a spatial color function of the primitive and a second dividing module configured to divide the primitive at a position between each adjacent two pieces of the piecewise continuous function if the spatial color function is a piecewise continuous function. In the above embodiment, the position where the color abruptly changes in the primitive can be easily identified.

Preferably, the rasterizing module 20 comprises a coefficient setting module configured to set respective resolution reduction coefficient for each sub primitive based on the ratio of the color change to the spatial size of each sub primitive. Furthermore, the rasterizing module 20 comprises a reducing resolution module configured to reduce the resolution of each sub primitive based on the respective resolution reduction coefficient. In addition, the rasterizing module 20 further comprises a performing module configured to rasterize each of the sub primitives, whose resolution is reduced. Furthermore, the rasterizing module 20 comprises a recovering module configured to recover the resolution of the rasterized sub primitive up to the original resolution. In the preferable embodiment, when the primitive is rasterized, the resolution reduction coefficients are dynamically determined so as to ensure optimum output quality and efficiency

Preferably, the coefficient setting module may further comprises a derivation module configured to take a

derivative $d(s_i)/d(l)$ with respect to a spatial length for the spatial color function of the sub primitive in each color field, where $s_i$ is a spatial color function in $i^{th}$ color field and $l$ is a spatial length. Furthermore, the coefficient setting module comprises a quantizing module configured to take the maximum value $max\ (d(s_i)/d(l))$ therein as a quantized value for the color change. In addition, the coefficient setting module comprises a calculating module configured to set the resolution reduction coefficient of the sub primitive $nBlockSize$ as $nBlockSize = L_d/(S_{max}/max(d(s_i)/d(l)))$, where $L_d$ is a spatial length in the radial direction of the sub primitive, $S_{max}$ is the maximum color difference in the range of the sub primitive.

The apparatus as described in the above can be easily implemented to set the resolution reduction coefficient with the less calculation.

In view of the above, the method and the apparatus according to the embodiments of the present application achieve an efficient rasterization of the gradient primitive with a high quality. With the method and the apparatus according to the embodiments of the present application, the efficiency of the rasterization can be improved as much as possible on the premise that the quality of the rasterization of the primitive is kept.

It will be readily apparent to those skilled in the art that the modules or steps of the present application may be implemented with a common computing device. In addition, the modules or steps of the present application can be concentrated or run in a single computing device or distributed in a network composed of multiple computing devices. Optionally, the modules or steps may be achieved by using codes of the executable program, so that they can be stored in the storage medium, or the plurality of the modules or steps can be fabricated into an individual integrated circuit module. Therefore, the present application is not limited to any particular hardware, software or combination thereof.

The foregoing is only preferred embodiments of the present application, and it is not intended to limit the present application. Moreover, it will be apparent to those skilled in the art that various modifications and variations can be made to the present application, such as a rasterization of a function gradient, a linear gradient, a circular gradient, a free structure gradient, a staggered structure gradient, Koons gradient and a tensor gradient.

**Claims**

1. A method for rasterization comprising:

   dividing a primitive at a position where a color abruptly changes into a plurality of sub primitives with continuously and gradually changed color; and
   rasterizing each sub primitive,

   wherein the step of dividing further comprises:

   scanning a shape and structure description of the primitive;
   determining corresponding parameters that are discontinuous; and
   dividing the primitive at a position where the parameters abruptly change, wherein each of the parameters is calculated with an independent variable corresponding to a spatial position in a direction of the gradient; or

   wherein the step of dividing further comprises:

   scanning a spatial color function of the primitive; and
   dividing the primitive at a position between each adjacent two pieces if the spatial color function is a piecewise continuous function.

2. The method according to claim 1, wherein the step of rasterizing further comprises:

   setting respective resolution reduction coefficient for each sub primitive in accordance with a ratio of the color change to the spatial size of each sub primitive;
   reducing the resolution of each sub primitive based on the respective resolution reduction coefficient;
   rasterizing each sub primitive with the reduced resolution; and
   recovering the resolution of the rasterized sub primitive to the original resolution.

3. The method according to claim 2, wherein the step of setting further comprises:

   taking a derivative $d(s_i)/d(l)$ with respect to a spatial length for the spatial color function of the sub primitive in each color field , where $s_i$ is a spatial color function in $i^{th}$ color field and $l$ is a spatial length;
   taking the maximum value $max\ (d(s_i)/d(l))$ as a quantized value for the color change;

setting the resolution reduction coefficient of the sub primitive *nBlockSize* as *nBlockSize* = $L_d/(S_{max}/max( d(s_d/d(l)))$, where $L_d$ is a spatial length in the radial direction of the sub primitive, $S_{max}$ is the maximum color difference in the range of the sub primitive.

4. The method according to claim 2, further comprising:

generating a clip path for each sub primitive when obtaining the plurality of sub primitives with continuously and gradually changed color; and
defining a range of each sub primitive in accordance with the respective clip path when recovering the resolution of the rasterized sub primitives.

5. An apparatus for rasterization, the apparatus comprising:

a dividing module configured to divide a primitive at a position where a color abruptly changes into a plurality of sub primitives with continuously and gradually changed color; and
a rasterizing module configure to rasterize each of the sub primitives,

wherein the dividing module further comprises:

a first scanning module configured to scan a shape and structure description of the primitive;
a first dividing module configured to determine the corresponding parameters that are discontinuous, and to divide the primitive at a position where the parameters abruptly changes, wherein each of the parameters is calculated with an independent variable corresponding to a spatial position in a direction of the gradient;
a second scanning module configured to scan a spatial color function of the primitive; and
a second dividing module configured to divide the primitive at a position between each adjacent two pieces if the spatial color function is a piecewise continuous function.

6. The apparatus according to claim 5, wherein the rasterizing module comprises:

a coefficient setting module configured to set respective resolution reduction coefficient for each sub primitive based on the ratio of the color change to a spatial size of each sub primitive; and
a reducing resolution module configured to reduce the resolution of each sub primitive based on the respective resolution reduction coefficient;
a performing module configured to rasterize the sub primitive with the reduced resolution; and
a recovering module configured to recover the resolution of the rasterized sub primitive to the original resolution.

7. The apparatus according to claim 6, wherein the coefficient setting module comprises:

a derivation module configured to take a derivative $d(s_i)/d(l)$ with respect to a spatial length for the spatial color function of the sub primitive in each color field, where $s_i$ is a spatial color function in $i^{th}$ color field and $l$ is a spatial length;
a quantizing module configured to take the maximum value $max (d(s_i)/d(l))$ as a quantized value for the color change; and
a calculating module configured to set the resolution reduction coefficient of the sub primitive *nBlockSize* as $nBlockSize = L_d/(S_{max}/max(d(s_i)/d(l)))$, wherein $L_d$ is a spatial length in the radial direction of the sub primitive, $S_{max}$ is the maximum color difference in the range of the sub primitive.

**Patentansprüche**

1. Verfahren zur Rasterisierung, umfassend:

Teilen eines Grundelements in einer Position, wo sich eine Farbe abrupt in mehrere Untergrundelemente mit kontinuierlich und schrittweise geänderter Farbe ändert; und
Rasterisierung jedes Untergrundelements,

wobei der Schritt des Teilens ferner Folgendes umfasst:

Abtasten einer Form- und Strukturbeschreibung des Grundelements;
Bestimmen korrespondierender Parameter, die diskontinuierlich sind; und
Teilen des Grundelements in einer Position, wo sich die Parameter abrupt ändern,
wobei jeder der Parameter mit einer unabhängigen Variablen entsprechend einer räumlichen Position in einer Richtung des Gradienten berechnet wird; oder

wobei der Schritt des Teilens ferner Folgendes umfasst:

Abtasten einer räumlichen Farbfunktion des Grundelements; und
Teilen des Grundelements in einer Position zwischen jeden benachbarten zwei Stücken, wenn die räumliche Farbfunktion eine stückweise kontinuierliche Funktion ist.

2. Verfahren nach Anspruch 1, wobei der Schritt der Rasterisierung ferner Folgendes umfasst:

Festlegen des jeweiligen Auflösungsreduktionskoeffizienten für jedes Untergrundelement in Übereinstimmung mit einem Verhältnis der Farbänderung zur räumlichen Größe jedes Untergrundelements;
Reduzieren der Auflösung jedes Untergrundelements auf Basis des jeweiligen Auflösungsreduktionskoeffizienten;
Rasterisierung jedes Untergrundelements mit der reduzierten Auflösung; und
Wiederherstellen der Auflösung des rasterisierten Untergrundelements in die ursprüngliche Auflösung.

3. Verfahren nach Anspruch 2, wobei der Schritt des Einstellens ferner Folgendes umfasst:

Nehmen eines Derivats $d(s_i)/d(l)$ in Bezug auf eine räumliche Länge für die räumliche Farbfunktion des Untergrundelements in jedem Farbfeld, wobei $s_i$ eine räumliche Farbfunktion im $i^{ten}$ Farbfeld und $l$ eine räumliche Länge ist;
Nehmen des Maximalwerts $max(d(s_i)/d(l))$ als einen quantisierten Wert für die Farbänderung;
Festlegen des Auflösungsreduktionskoeffizienten des Untergrundelements $nBlockSize$ als $nBlockSize = L_d/(S_{max}/max(d(s_i)/d(l)))$, wobei $L_d$ eine räumliche Länge in der radialen Richtung des Untergrundelements ist, $S_{max}$ ist die maximale Farbdifferenz im Bereich des Untergrundelements.

4. Verfahren nach Anspruch 2, ferner umfassend:

Erzeugen eines Abschneidepfads für jedes Untergrundelement, wenn die mehreren Untergrundelemente mit kontinuierlich und schrittweise geänderter Farbe erhalten werden; und
Definieren eines Bereichs jedes Untergrundelements in Übereinstimmung mit dem jeweiligen Abschneidepfad beim Wiederherstellen der Auflösung der rasterisierten Untergrundelemente.

5. Vorrichtung zur Rasterisierung, wobei die Vorrichtung umfasst:

ein Teilungsmodul, das für ein Teilen eines Grundelements in einer Position, wo sich eine Farbe abrupt in mehrere Untergrundelemente mit kontinuierlich und schrittweise geänderter Farbe ändert, konfiguriert ist; und
ein Rasterisierungsmodul, konfiguriert zur Rasterisierung jedes der Untergrundelemente,

wobei das Teilungsmodul ferner Folgendes aufweist:

ein erstes Abtastmodul, konfiguriert zum Abtasten einer Form und Strukturbeschreibung des Grundelements;
ein erstes Teilungsmodul, konfiguriert zum Bestimmen der entsprechenden Parameter, die diskontinuierlich sind, und zum Teilen des Grundelements in einer Position, wo sich die Parameter abrupt ändern, wobei jeder der Parameter mit einer unabhängigen Variable, die einer räumlichen Position in einer Richtung des Gradienten entspricht, berechnet wird;
ein zweites Abtastmodul, konfiguriert zum Abtasten einer räumlichen Farbfunktion des Grundelements; und
ein zweites Teilungsmodul, konfiguriert zum Teilen des Grundelements in einer Position zwischen jeden benachbarten zwei Stücken, wenn die räumliche Farbfunktion eine stückweise kontinuierliche Funktion ist.

6. Vorrichtung nach Anspruch 5, wobei das Rasterisierungsmodul Folgendes aufweist:

ein Koeffizienteneinstellmodul, das für ein Einstellen des jeweiligen Auflösungsreduktionskoeffizienten für jedes Untergrundelement auf Basis eines Verhältnisses der Farbänderung zu einer räumlichen Größe jedes Untergrundelements konfiguriert ist; und

ein Auflösungsreduktionsmodul, das für ein Reduzieren der Auflösung jedes Untergrundelements auf Basis des jeweiligen Auflösungsreduktionskoeffizienten konfiguriert ist;

ein Ausführungsmodul, konfiguriert zur Rasterisierung jedes der Untergrundelemente mit der reduzierten Auflösung; und

ein Wiederherstellungsmodul, konfiguriert zur Wiederherstellung der Auflösung des rasterisierten Untergrundelements in die ursprüngliche Auflösung.

7. Vorrichtung nach Anspruch 6, wobei das Koeffizienteneinstellmodul Folgendes aufweist:

ein Derivationsmodul, das für ein Nehmen eines Derivats $d(s_i)/d(l)$ in Bezug auf eine räumliche Länge für die räumliche Farbfunktion des Untergrundelements in jedem Farbfeld, wobei $s_i$ eine räumliche Farbfunktion im $i^{ten}$ Farbfeld und $l$ eine räumliche Länge ist, konfiguriert ist;

ein Quantisierungsmodul, das für ein Nehmen des Maximalwerts $max\,(d(s_i)/d(l))$ als einen quantisierten Wert für die Farbänderung konfiguriert ist; und

ein Berechnungsmodul, das für ein Festlegen des Auflösungsreduktionskoeffizienten des Untergrundelements $nBlockSize$ als $nBlockSize = L_d/(S_{max}/max(d(s_i)/d(l)))$ konfiguriert ist, wobei $L_d$ eine räumliche Länge in der radialen Richtung des Untergrundelements ist, $S_{max}$ ist die maximale Farbdifferenz im Bereich des Untergrundelements.

## Revendications

1. Procédé de tramage comprenant :

la division d'une primitive à une position où une couleur change brusquement en une pluralité de sous-primitives avec une couleur changée continûment et graduellement ; et

le tramage de chaque sous-primitive,

dans lequel l'étape de division comprend en outre :

le balayage d'une description de forme et de structure de la primitive ;

la détermination de paramètres correspondants qui sont discontinus ; et

la division de la primitive à une position où les paramètres changent brusquement, dans lequel chacun des paramètres est calculé avec une variable indépendante correspondant à une position spatiale dans une direction du gradient ; ou

dans lequel l'étape de division comprend en outre :

le balayage d'une fonction de couleur spatiale de la primitive ; et

la division de la primitive à une position entre chacun de deux éléments adjacents si la fonction de couleur spatiale est une fonction continue au niveau des éléments.

2. Procédé selon la revendication 1, dans lequel l'étape de tramage comprend en outre :

l'établissement d'un coefficient de réduction de résolution respectif pour chaque sous-primitive conformément à un rapport entre le changement de couleur et la taille spatiale de chaque sous-primitive ;

la réduction de la résolution de chaque sous-primitive sur la base du coefficient de réduction de résolution respectif ;

le tramage de chaque sous-primitive avec la résolution réduite ; et

le rétablissement de la résolution de la sous-primitive tramée à la résolution d'origine.

3. Procédé selon la revendication 2, dans lequel l'étape d'établissement comprend en outre :

l'obtention d'une dérivée $d(s_i)/d(l)$ par rapport à une longueur spatiale pour la fonction de couleur spatiale de la sous-primitive dans chaque champ de couleur, où $s_i$ est une fonction de couleur spatiale dans un $i^{ème}$ champ de couleur et $l$ est une longueur spatiale ;

l'obtention de la valeur maximum *max (d(s$_i$)/d(l))* en tant que valeur quantifiée pour le changement de couleur ;

l'établissement du coefficient de réduction de résolution de la sous-primitive *nBlockSize* en tant que *nBlockSize = L$_d$/(S$_{max}$/max(d(s$_i$)/d(l)))*, où *L$_d$* est une longueur spatiale dans la direction radiale de la sous-primitive, *S$_{max}$* est la différence de couleur maximum dans la plage de la sous-primitive.

4. Procédé selon la revendication 2, comprenant en outre :

la génération d'un trajet de détourage pour chaque sous-primitive lors de l'obtention de la pluralité de sous-primitives avec une couleur changée continûment et graduellement ; et

la définition d'une plage de chaque sous-primitive conformément au trajet de détourage respectif lors du rétablissement de la résolution des sous-primitives tramées.

5. Appareil de tramage, l'appareil comprenant :

un module de division configuré pour diviser une primitive à une position où une couleur change brusquement en une pluralité de sous-primitives avec une couleur changée continûment et graduellement ; et

un module de tramage configuré pour tramer chacune des sous-primitives,

dans lequel le module de division comprend en outre :

un premier module de balayage configuré pour balayer une description de forme et de structure de la primitive ;

un premier module de division configuré pour déterminer les paramètres correspondants qui sont discontinus, et pour diviser la primitive à une position où les paramètres changent brusquement, dans lequel chacun des paramètres est calculé avec une variable indépendante correspondant à une position spatiale dans une direction du gradient ;

un deuxième module de balayage configuré pour balayer une fonction de couleur spatiale de la primitive ; et

un deuxième module de division configuré pour diviser la primitive à une position entre chacun de deux éléments adjacents si la fonction de couleur spatiale est une fonction continue au niveau des éléments.

6. Appareil selon la revendication 5, dans lequel le module de tramage comprend :

un module d'établissement de coefficient configuré pour établir un coefficient de réduction de résolution respectif pour chaque sous-primitive sur la base du rapport entre le changement de couleur et une taille spatiale de chaque sous-primitive ; et

un module de réduction de résolution configuré pour réduire la résolution de chaque sous-primitive sur la base du coefficient de réduction de résolution respectif ;

un module d'exécution configuré pour tramer la sous-primitive avec la résolution réduite ; et

un module de rétablissement configuré pour rétablir la résolution de la sous-primitive tramée à la résolution d'origine.

7. Appareil selon la revendication 6, dans lequel le module d'établissement de coefficient comprend :

un module de dérivation configuré pour obtenir une dérivée *d(s$_i$)/d(l)* par rapport à une longueur spatiale pour la fonction de couleur spatiale de la sous-primitive dans chaque champ de couleur, où *s$_1$* est une fonction de couleur spatiale dans un *i$^{ème}$* champ de couleur et *l* est une longueur spatiale ;

un module de quantification configuré pour obtenir la valeur maximum *max (d(s$_i$)/d(l))* en tant que valeur quantifiée pour le changement de couleur ; et

un module de calcul configuré pour établir le coefficient de réduction de résolution de la sous-primitive *nBlockSize* en tant que *nBlockSize = L$_d$/(S$_{max}$/max(d(s$_i$)/d(l)))*, où *L$_d$* est une longueur spatiale dans la direction radiale de la sous-primitive, *S$_{max}$* est la différence de couleur maximum dans la plage de la sous-primitive.

Figure 1

Figure 2

dividing the primitive at a position where a color abruptly
changes therein into a plurality of sub primitives with
continuously and gradually changed color

S 10

rasterizing each of the sub primitives

S 20

Figure 3

Figure 4

Figure 5

Figure 6

Figure 7

Figure 8

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005114572 A2